# EUROPEAN PATENT SPECIFICATION

(11) **EP 4 467 220 B1**
(45) Date of publication and mention of the grant of the patent: **25.11.2026**
(21) Application number: 23743289.3
(22) Date of filing: 18.01.2023
(51) Int. Cl.: B01D 35/02, B01D 29/07, B01D 35/027, F16K 24/04

(54) **SUCTION STRAINER**
SAUGSIEB
CRÉPINE D'ASPIRATION

(30) Priority: 20.01.2022 JP 2022007420
(43) Date of publication of application: 27.11.2024
(73) Proprietor: YAMASHIN-FILTER CORP., Yokohama-shi, Kanagawa 231-0062 (JP)
(72) Inventor: NODOMI, Youichi, Yokosuka-shi, Kanagawa 239-0847 (JP); HASHIMOTO, Shigeru, Yokosuka-shi, Kanagawa 239-0847 (JP); NAKAOKA, Hideo, Yokosuka-shi, Kanagawa 239-0847 (JP)
(74) Representative: Hasegawa, Kan
(86) International application number: PCT/JP2023/001396
(87) International publication number: WO 2023/140296

(56) References cited:
- WO-A1-2021/020470
- WO-A1-2021/020470
- JP-A- 2003 299 917
- JP-A- 2011 104 548
- JP-A- 2020 022 924
- JP-A- 2020 022 924
- JP-A- 2021 010 854
- JP-U- S5 620 617
- JP-U- S61 163 018
- US-A- 5 824 211

## Description

### Technical Field

The present invention relates to a suction strainer.

### Background Art

JP 2020 22924 A discloses a suction filter provided with a cover and a valve. The cover is provided at the upper end surface of a cylindrical first filtration part so as to cover the entirety of the upper side of the first filtration part, and the valve is provided at a hollow part of the first filtration part on the lower side of the cover. In the valve, a first valve that is movable along a rod-shaped member is switched between a closed state of closing a hole of the cover and an open state of not closing the hole.

JP 2003 299917 A discloses a connector type in-line filter capable of removing air bubbles occurring on the primary side or secondary side of a filter film or on both sides thereof when a liquid is filtered and gradually accumulated to close the pores of the filter film. In the connector type in-line filter, a vent passage pierces a filter support member radially from the position of the inner end surface of the filter support member to open in the outside surface thereof and is formed to the rear end part of the filter support member.

US 5 824 211 A discloses an oil reclamation device for removing solid contaminates and water or other volatile contaminates from the engine lubricating oils and hydraulic fluids. The oil reclamation device relates to a unique combination evaporation chamber and filter housing, and to a filter assembly. A first feature of this oil reclamation device is the utilization of space through the efficient combining of the filter and evaporation chambers within one compact housing, which utilization brings the benefits of a compact installation with a minimum difficulty of installation. Another feature of this design is the efficient use of engine oil to heat the evaporation surface evenly and effectively without the need of any additional heat source.

WO 2021 020470 A1 a suction strainer which can remove air bubbles using an air vent structure with a compact and simple configuration. An air vent hole is formed in an upper plate covering an entire upper end surface of a substantially cylindrical filtration part formed by folding a thin plate into a pleated shape. A moving member is provided so as to be movable between a position to close the air vent hole and a position to open the air vent hole.

### Summary of Invention

### Technical Problem

However, the invention disclosed in JP 2020-22924 A is applicable only to a case where the axis of the cylindrical filtration part is set along the vertical direction, and the cover is provided along the horizontal direction, but is not applicable to a case where the cylindrical filtration part is provided along the horizontal direction.

Under the above-described circumstances, an object of the present invention is to provide a suction strainer that can discharge bubbles accumulated inside in a case where the filtration part is provided along the horizontal direction.

### Solution to Problem

The problem is solved by the teachings of the independent claims. Further embodiments are defined in the dependent claims. The invention is defined by the appended claims. A suction strainer according to the present disclosure is provided at a tank configured to store oil, the suction strainer including: a filtration part having a cylindrical shape; a first end member and a second end member configured to cover respective both ends of the filtration part; and a float provided at the second end member. The filtration part is provided along a horizontal direction, the first end member includes a first attaching portion having a plate shape provided at a side surface of the tank, a second attaching portion provided with the filtration part, and a first hole configured to communicate a hollow part of the filtration part and the outside of the tank, the second attaching portion, the filtration part, and the second end member are provided inside the tank, the second end member includes a plate-shaped part configured to cover the hollow part of the filtration part, the plate-shaped part is provided with an air vent hole, and the float is provided in such a manner that the float is movable in the horizontal direction between a position of closing the air vent hole and a position of opening the air vent hole.

With the suction strainer according to the present invention, one end of the filtration part is provided at the second attaching portion of the first end member provided at the side surface of the tank, and the float is provided at the second end member provided at the other end of the filtration part. The air vent hole is provided in the plate-shaped part of the second end member that covers the hollow part of the filtration part, and the float can move in the horizontal direction between the position of closing the air vent hole and the position opening the air vent hole. In this manner, in the case where the filtration part is provided along the horizontal direction, bubbles accumulated inside can be discharged.

An upper end of the air vent hole may be higher than an upper end of the first hole. In this manner, the bubbles having grown into larger sizes in the hollow part of the filtration part can be easily discharged to the outside of the suction strainer through the air vent hole.

The filtration part may have a circular cylindrical shape, and a diameter of the air vent hole may be equal to or greater than half a radius of the hollow part of the filtration part. In this manner, the bubbles having grown into larger sizes in the hollow part of the filtration part can be easily discharged to the outside of the suction strainer through the air vent hole.

The plate-shaped part may be located on substantially the same plane as an end of the filtration part on the second end member side. In this manner, the air accumulated in the vicinity of the end filtration part on the second end member side is easily discharged from the air vent hole.

The first hole may include a through hole, and a recess provided integrally with the through hole on an upper side of the through hole in a vertical direction, and a first end as one end of the through hole and the recess may open at an end of the first attaching portion disposed on the tank side, and a second end of the through hole and the recess on an opposite side of the first end may open at an end of the first attaching portion disposed on the filtration part side. In this manner, the remaining air accumulated at the recess can be easily discharged to the outside of the suction strainer through the air vent hole.

The recess may have an arch shape protruding to an upper side in the vertical direction in a plane orthogonal to a central axis of the through hole. In this manner, the bottom surface (the upper end in the vertical direction) of the recess is small and the remaining air accumulated at the recess easily grows into large bubbles, and as a result, the remaining air can be discharged through the air vent hole.

### Advantageous Effects of Invention

According to the present invention, it is possible to discharge bubbles accumulated inside the suction strainer including the filtration part provided along the horizontal direction.

### Brief Description of Drawings

FIG. 1 is a schematic diagram illustrating a hydraulic circuit 110 including a suction strainer 1 according to an embodiment of the present invention.
FIG. 2 is a schematic diagram illustrating a tank 100 in which the suction strainer 1 is provided inside.
FIG. 3 is a schematic diagram illustrating the suction strainer 1, FIG. 3(A) is a front view, and FIG. 3(B) is a right side view.
FIG. 4 is a schematic diagram illustrating a plate 30 and a float 40.
FIG. 5 is a schematic diagram illustrating a suction strainer 2 and a tank 100 according to an embodiment of the present invention.
FIG. 6 is a schematic diagram illustrating the suction strainer 2, FIG. 6(A) is a front view, and FIG. 6(B) is a right side view.
FIG. 7 is a schematic diagram illustrating a hydraulic circuit 110A including a suction strainer 2A provided along the vertical direction which is not part of the invention.
FIG. 8 is a schematic diagram illustrating the suction strainer 3, FIG. 8(A) is a front view, and FIG. 8(B) is a right side view.
FIG. 9 is a schematic diagram illustrating a plate 20A.

### Description of Embodiments

Embodiments of the present disclosure are elaborated below with reference to the accompanying drawings.

### First Embodiment

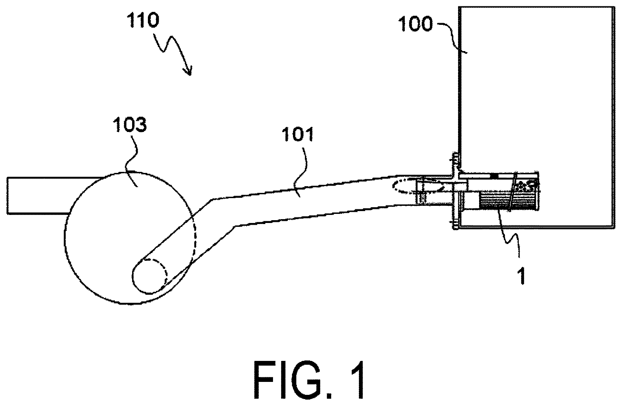

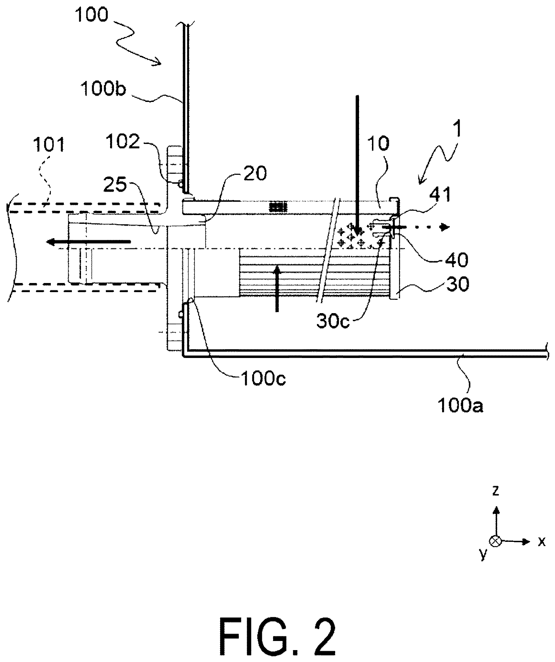

FIG. 1 is a schematic diagram illustrating a hydraulic circuit 110 including a suction strainer 1 according to an embodiment of the present invention. FIG. 2 is a schematic diagram illustrating the suction strainer 1 and a tank 100. In FIGS. 1 and 2, hatching representing cross sections is omitted.

The tank 100 is installed in a work machine (e.g., a hydraulic apparatus) not illustrated in the drawing. The tank 100 is a tank for storing the hydraulic fluid and is provided in a hydraulic circuit 110 of the hydraulic fluid to be supplied to the hydraulic apparatus. Note that the component provided in the tank 100 is not limited to the hydraulic circuit, and the liquid stored in the tank 100 is also not limited to the hydraulic fluid.

The tank 100 has a box shape that is hollow inside, for example. The tank 100 mainly includes inside the suction strainer 1 and a return filter (omitted in the drawing).

In the hydraulic circuit 110, the hydraulic fluid is introduced to the tank 100 through a hydraulic apparatus not illustrated in the drawing. In the tank 100, an inlet (omitted in the drawing) that allows the hydraulic fluid to flow into the tank 100 is formed. The hydraulic fluid having entered from the inlet is guided to the return filter. The hydraulic fluid is filtered by the return filter, and stored in the tank 100.

In the vicinity of the lower end portion of a side surface 100b of the tank 100 (in the present embodiment, a position in the vicinity of a bottom surface 100a in the side surface of the tank 100), an outlet 100c that allows the hydraulic fluid inside the tank 100 to flow out to a hydraulic pump 103 is formed. The outlet 100c is provided with the suction strainer 1. The suction strainer 1 has a cylindrical shape and is provided along the horizontal direction.

An elastic member 102 such as an O-ring is provided between the suction strainer 1 and the tank 100. Thus, the hydraulic fluid does not leak from the portion between the suction strainer 1 and the tank 100.

The suction strainer 1 is provided with a suction pipe 101 extending from the outer side of the tank 100 to the suction port of the hydraulic pump 103. The hydraulic fluid stored in the tank 100 is suctioned by the hydraulic pump 103, carried to the suction pipe 101 through the suction strainer 1, and supplied to the hydraulic apparatus again.

In general, the hydraulic pump 103 is provided at a position lower than the outlet 100c, and due to such a structure, air tends to accumulate inside the suction pipe 101 (e.g., in the vicinity of an upper corner (see the chain double-dashed line in FIG. 1)). In addition, air accumulates inside the suction pipe 101 not only during operation of the hydraulic pump 103 but also while the hydraulic pump 103 is stopped. If air accumulates inside the suction pipe 101, there is a risk that the accumulated air may flow all at once to the hydraulic pump 103 when the hydraulic pump 103 is restarted. The suction strainer 1 of the present embodiment discharges the bubbles inside the suction strainer 1 to the tank 100 before they flow out to the suction pipe 101 so that air does not accumulate inside the suction pipe 101.

Note that the outlet 100c and the suction strainer 1 need only to be provided at the side surface 100b of the tank 100, and the positions of the outlet 100c and the suction strainer 1 are not limited to the positions illustrated in FIG. 1.

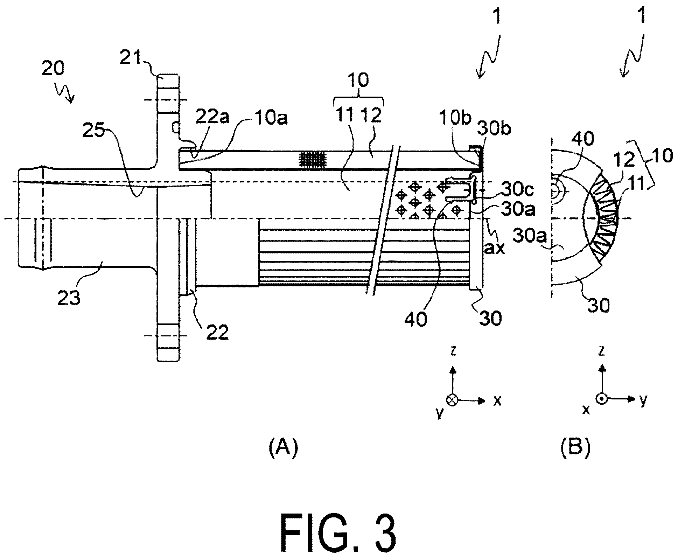

FIG. 3 is a schematic diagram illustrating the suction strainer 1. FIG. 3(A) is a front view, and FIG. 3(B) is a right side view. Note that in FIG. 3(A), the upper half is illustrated in a cross section (hatching representing cross sections is omitted), and FIG. 3(B) illustrates only the right half. In the following description, the extending direction of the suction strainer 1 (the extending direction of a central axis ax of the suction strainer 1) is the x direction, and the vertical direction is the z direction (vertically upward is the +z direction). In addition, the direction orthogonal to the x direction and the z direction is the y direction.

The suction strainer 1 mainly includes a filtration part 10, plates 20 and 30, and a float 40. Note that in FIG. 2B, the illustration of plate 20 is omitted, and a part of the plate 30 is cut to expose the filtration part 10.

The filtration part 10 mainly includes an inner cylinder 11 and a pleated filter medium 12. The inner cylinder 11 is a cylindrical (in this case, circular cylindrical) member including openings at both ends. The inner cylinder 11 is formed with a highly corrosion-resistant material (e.g., stainless steel). In substantially the entire region of the inner cylinder 11, a through hole (only partially illustrated in FIG. 2) through which the hydraulic fluid passes is formed. The diameter of the inner cylinder 11 is smaller than the diameter of the pleated filter medium 12, and the inner cylinder 11 is provided inside the pleated filter medium 12.

The pleated filter medium 12 is a member that filters the hydraulic fluid, and has a cylindrical (in this case, circular cylindrical) shape. The height of the pleated filter medium 12 is substantially the same as the height of the inner cylinder 11. The pleated filter medium 12 is formed by pleating a sheet-shaped thin plate having holes in its entirety, and then rolling the pleated thin plate into a cylindrical shape by coupling the both ends of the plate. In this manner, the pleated filter medium 12 is formed in a substantially cylinder pleated shape. Note that in the present embodiment, the pleated filter medium 12 is formed of a fine metal (e.g., stainless steel) wire mesh with fine wires woven into a mesh, but filter paper made of synthetic resin, paper, or the like may be used. In addition, the filtration part 10 may include a filter other than the pleated filter medium 12.

The plate 20 is provided at one end 10a of the filtration part 10 (the inner cylinder 11 and the pleated filter medium 12), and the plate 30 is provided at the other end 10b. The plate 20 and the plate 30 are formed with a highly corrosion-resistant material (resin or metal).

The plate 20 (corresponding to the first end member of the present invention) mainly includes a plate-shaped attaching portion 21 provided at the tank 100 (see FIGS. 1 to 2), an attaching portion 22 attached to the filtration part 10, a mounting pipe 23 provided at the suction pipe 101 (see FIG. 1), and a hole 25 (corresponding to the first hole of the present invention) extending through the attaching portion 21, the attaching portion 22 and the mounting pipe 23.

The attaching portion 22 and the mounting pipe 23 are provided at the attaching portion 21. The mounting pipe 23, the attaching portion 21 and the attaching portion 22 are sequentially disposed side by side along the x direction when the attaching portion 21 is provided at the tank 100.

The attaching portion 21 has a plate shape, and is provided outside the tank 100. When the attaching portion 21 is provided at the tank 100, the attaching portion 22 is disposed inside the tank 100, and the mounting pipe 23 is disposed outside the tank 100. As such, when the attaching portion 21 is provided at the tank 100, the attaching portion 22, the filtration part 10, and the plate 30 are provided inside the tank 100.

The attaching portion 22 is provided to cover the end 10a. The attaching portion 22 includes a recess 22a to which the filtration part 10 is inserted. By providing the filtration part 10 at the recess 22a, the filtration part 10 is extended along the horizontal direction.

The hole 25 communicates the hollow part of the filtration part 10 and the outside of the tank 100 (in this case, the suction pipe 101) with each other. Note that in the present embodiment, the hole 25 has a tapered shape with an internal diameter that increases toward both ends, but the shape of the hole 25 is not limited to this. In addition, in the present embodiment, the axis of the hole 25 coincides with the central axis ax, but the axis of the hole 25 and the central axis ax may be shifted from each other. In addition, in the present embodiment, the hole 25 extends along the horizontal direction (in this case, the x direction) when the attaching portion 21 is provided at the tank 100, but it may be tilted with respect to the horizontal direction.

The plate 30 (corresponding to the second end member of the present invention) includes a plate-shaped part 30a that covers the hollow part of the filtration part 10, a recess 30b to which the end 10b is inserted, and an air vent hole 30c. The plate 30 includes the recess 30b to which the inner cylinder 11 and the pleated filter medium 12 are inserted, and the plate 30 covers the end (opening) of the filtration part 10 when the recess 30b is provided at the filtration part 10.

The plate-shaped part 30a is provided with the air vent hole 30c. The plate 30 is provided with the float 40. The upper end of the air vent hole 30c is higher than the upper end of the hole 25 (see the dotted line in FIG. 2). In addition, the diameter of the air vent hole 30c is desirably equal to or greater than half the radius of the hollow part of the filtration part 10.

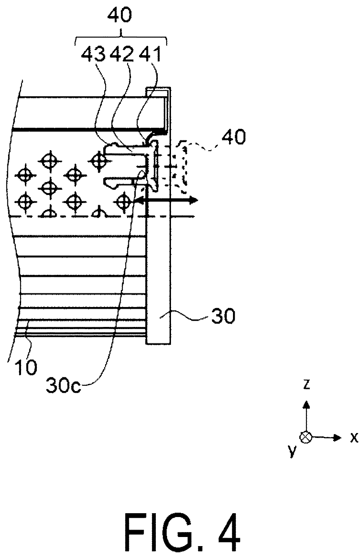

FIG. 4 is a schematic diagram illustrating the plate 30 and the float 40. The float 40 mainly includes a body part 41 and a leg part 42. The leg part 42 is provided at the surface of the body part 41 on the -x side, and the leg part 42 is inserted into the air vent hole 30c.

The leg part 42 is composed of two plate-shaped members, and is deformable. A claw 43 is provided at the tip end of the leg part 42. The body part 41 and the claw 43 are larger than the air vent hole 30c. The float 40 is attached to the air vent hole 30c by deforming the leg part 42 and press-fitting the claw 43 and the leg part 42 into the air vent hole 30c. Since the body part 41 and the claw 43 are larger than the air vent hole 30c, the float 40 does not drop off from the air vent hole 30c.

When the leg part 42 moves in the x direction along the air vent hole 30c (see the arrow in FIG. 4), the float 40 can move in the horizontal direction between the position of closing the air vent hole 30c (see the solid line in FIG. 4), and the position of opening the air vent hole 30c (see the dotted line in FIG. 4).

Next, a function of the suction strainer 1 having the above-mentioned configuration is described. As illustrated in FIGS. 1 and 2, the suction strainer 1 is horizontally attached to the tank 100, and hydraulic fluid is stored in the tank 100.

The plates 20 and 30 are provided at both ends of the filtration part 10, and therefore when the hydraulic fluid stored in the tank 100 is suctioned by the hydraulic pump 103 (see FIG. 1) as indicated by the solid arrow in FIG. 2, it is suctioned from the outer side of the filtration part 10 into the filtration part 10 so as to flow out to the suction pipe 101 through the hole 25.

In addition, since the hydraulic fluid is suctioned by the hydraulic pump, the float 40 is pulled in the -x direction together with the hydraulic fluid such that the float 40 makes contact with the plate 30 and the body part 41 closes the air vent hole 30c. In this manner, the hydraulic fluid does not enter the suction strainer 1 from parts other than the filtration part 10.

When the hydraulic fluid is suctioned into the filtration part 10, bubbles contained in the hydraulic fluid are also suctioned into the filtration part 10 together with the hydraulic fluid. The bubbles gather and grow into larger bubbles inside the filtration part 10. When the bubbles accumulate and grow into larger sizes in the hollow part of the filtration part 10, the bubbles exert a force in the +x direction on the float 40. As a result, they extrude the float 40 in the +x direction, causing the air vent hole 30c to open. As a result, as indicated by the chain double-dashed line arrow in FIG. 2, the bubbles are discharged from the air vent hole 30c to the outside of the suction strainer 1.

The upper end of the air vent hole 30c is higher than the upper end of the hole 25. Since the bubbles go upward (the +z direction), the bubbles having grown into larger sizes in the hollow part of the filtration part 10 tend to be discharged to the outside of the suction strainer 1 through the air vent hole 30c rather than carried to the hole 25. In addition, with the diameter of the air vent hole 30c set to equal to or greater than half the radius of the hollow part of the filtration part 10, the bubbles having grown into larger sizes in the hollow part of the filtration part 10 tend to be discharged to the outside of the suction strainer 1.

According to the present embodiment, in the case where the suction strainer 1 is provided along the horizontal direction, the bubbles accumulated inside the suction strainer 1 can be discharged from the suction strainer 1 through the air vent hole 30c. As a result, accumulation of bubbles in the suction pipe 101 and defects due to the pump suctioning the air can be prevented. In addition, it also prevents damages to the components and the like due to temporary extreme increase in the temperature and pressure of the hydraulic fluid bubbles bursting in the hydraulic circuit and the like.

For example, in the case where a suction strainer with no configuration of ejecting bubbles accumulated inside is used, almost all bubbles inside the suction strainer may flow into the suction pipe 101, and the air accumulated in the suction pipe 101 may flow to the hydraulic pump 103 all at once. Conversely, the suction strainer 1 can discharge the bubbles accumulated inside through the air vent hole 30c, and thus the bubbles are less likely to be accumulated inside the suction pipe 101.

Note that in the present embodiment, the float 40 includes the leg part 42 composed of two plate-shaped members, but the configuration of the float 40 is not limited to this. For example, the leg part may have a cylindrical shape with a slit. In this case, it is desirable to provide a hole extending in the radial direction in the leg part. In addition, for example, a protrusion may be provided at the surface of the body part 41 on the -x side to prevent the body part 41 and plate-shaped part 30a from making intimate contact with each other. In addition, for example, the body part may have a spherical shape, a hemispherical shape, or a truncated conical shape.

In addition, in the present embodiment, the filtration part 10 includes one pleated filter medium 12, but the filtration part may have double pleated filter mediums.

### Second Embodiment

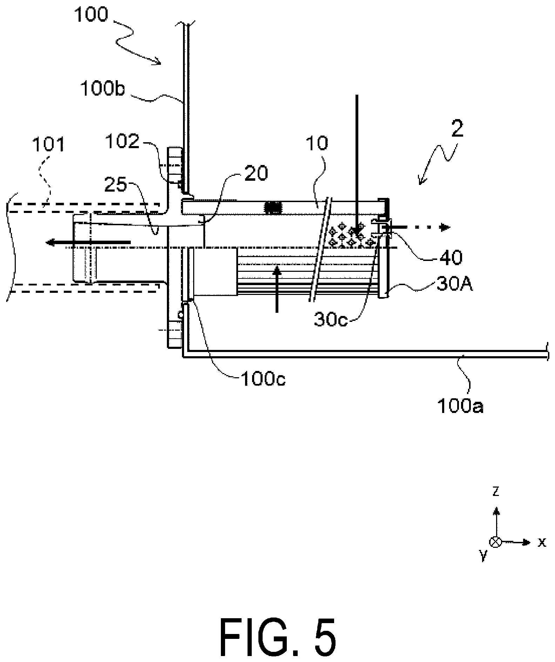

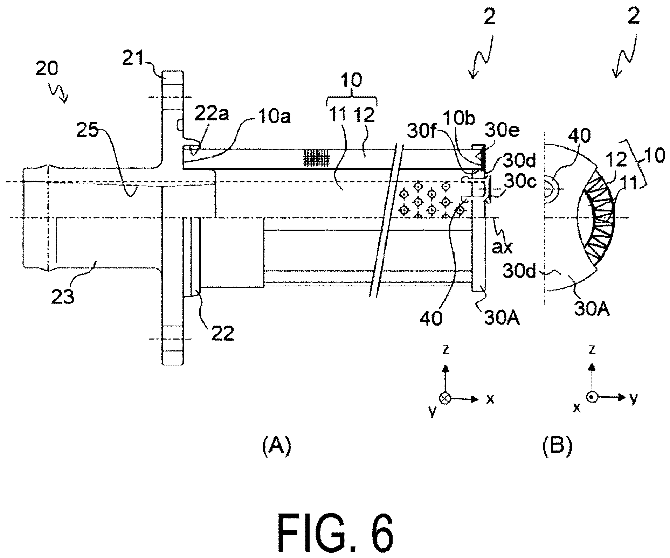

FIG. 5 is a schematic diagram illustrating a suction strainer 2 and the tank 100 according to an embodiment of the present invention. FIG. 6 is a schematic diagram illustrating the suction strainer 2, FIG. 6(A) is a front view, and FIG. 6(B) is a right side view. In FIG. 6(A), the upper half is illustrated in a cross section (hatching representing cross sections is omitted), and FIG. 6(B) illustrates only the right half. In the following description, the same parts as those of the first embodiment are denoted with the same reference numerals, and the description thereof is omitted.

The suction strainer 2 mainly includes the filtration part 10, the plates 20 and 30A, and the float 40. Note that in FIG. 5(B), illustration of the plate 20 is omitted, and a part of the plate 30A is cut to expose the filtration part 10.

The plate 30A is a bottomed cylindrical member that covers the entire end (opening) of the filtration part 10, and has a U-cross-sectional shape. The air vent hole 30c is provided in the bottom surface of the plate 30A. In addition, the plate 30A is provided with a recess 30e to which the inner cylinder 11 and the pleated filter medium 12 are inserted. Note that a plurality of holes may be provided in an inner peripheral surface 30f of the recess 30e.

As viewed from the side surface (as viewed along the central axis ax), the air vent hole 30c is provided at a position not overlapping the recess 30e, i.e., at a plate-shaped part 30d, which is a portion that covers the hollow part of filtration of part 10 in the bottom surface of the plate 30A. In addition, the upper end of the air vent hole 30c is higher than the upper end of the hole 25 (see the dotted line in FIG. 5).

According to the present embodiment, there is no step at the bottom surface of the plate 30A, and the plate-shaped part 30d, i.e., the air vent hole 30c, is located on substantially the same plane as the end 10b of the filtration part 10, and thus, the air accumulated in the vicinity of the end 10b of the filtration part 10 is easily discharged from the air vent hole 30c.

### Modifications not encompassed by the wording of the claims:

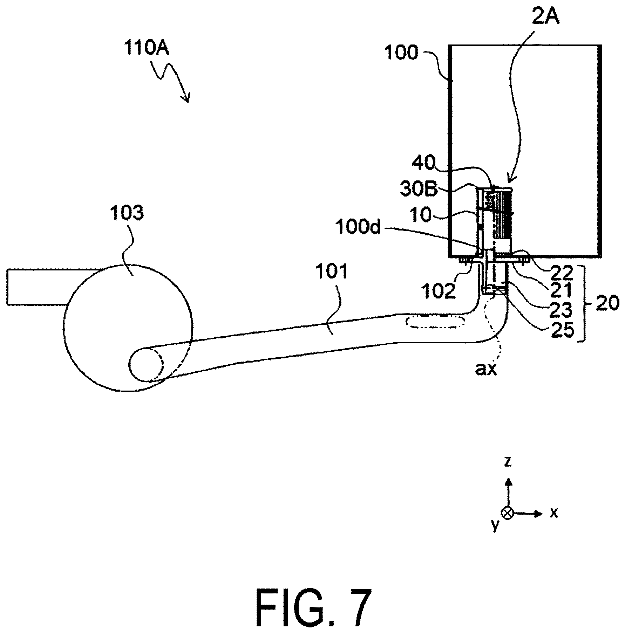

In the first and second embodiments, the suction strainers 1 and 2 are provided along the horizontal direction, but the suction strainers 1 and 2 may be provided along the vertical direction. FIG. 7 is a schematic diagram illustrating a hydraulic circuit 110A including a suction strainer 2A provided along the vertical direction. FIG. 7 illustrates a cross section of the left half of the suction strainer 2A (hatching representing cross sections is omitted).

In the hydraulic circuit 110A, the suction strainer 2A, i.e., the filtration part 10 is provided along the vertical direction. In the bottom surface 100a of the tank 100, an outlet 100d for causing the hydraulic fluid inside the tank 100 to flow out to the hydraulic pump 103 is formed. The outlet 100d is provided with the suction strainer 2A.

The suction strainer 2A mainly includes the filtration part 10, the plates 20 and 30B, and the float 40. One end 10a of the filtration part 10 is provided with the plate 20, and the other end 10b is provided with the plate 30B.

The plate 20 mainly includes the plate-shaped attaching portion 21 provided at the bottom surface 100a of the tank 100, the attaching portion 22 to which the filtration part 10 is attached, the mounting pipe 23 to which the suction pipe 101 is provided, and the hole 25 extending through the attaching portion 21, the attaching portion 22 and the mounting pipe 23.

As with the plate 30A, the plate 30B is a bottomed cylindrical member that covers the entire end (opening) of the filtration part 10, and has a U-cross-sectional shape. The plate 30A and the plate 30B are different from each other in positions of the air vent hole 30c, but other points are the same. In the plate 30B, the air vent hole 30c is provided in the vicinity of the central axis ax. It should be noted that the air vent hole 30c is also provided at the plate-shaped part 30d, which is a portion that covers the hollow part of filtration of part 10 in the bottom surface of the plate 30A.

The suction strainer 2A is provided at the tank 100 by inserting the plate 30B and the filtration part 10 into the outlet 100d, and fixing the attaching portion 21 to the lower side of the bottom surface 100a with a screw or the like. In this state, the attaching portion 22, the filtration part 10, and the plate 30B are provided inside the tank 100.

In the suction strainer 2A, the central axis ax is along the vertical direction, and therefore the plate 30B, i.e., the plate-shaped part 30d, is provided along the horizontal direction. The float 40 is provided in a vertically movable manner between the position of closing the air vent hole 30c and the position of opening the air vent hole 30c.

When the hydraulic fluid stored in the tank 100 is suctioned by the hydraulic pump 103, it is suctioned from the outer side of the filtration part 10 into the filtration part 10 so as to flow to the suction pipe 101 through the hole 25. In addition, since the hydraulic fluid is suctioned by the hydraulic pump, the float 40 is pulled to the -z direction together with the hydraulic fluid, and the float 40 makes contact with the plate 30B such that the body part 41 (see FIG. 4) closes the air vent hole 30c.

When bubbles accumulate and grow into larger sizes in the hollow part of the filtration part 10, the bubbles exert a force in the +z direction on the float 40. As a result, they push the float 40 up in the +z direction, causing the air vent hole 30c to open. As a result, the bubbles are discharged from the air vent hole 30c to the outside of the suction strainer 2A.

In general, the hydraulic pump 103 is provided at a position lower than the outlet 100c, and due to such a structure, air tends to accumulate inside the suction pipe 101 (see the chain double-dashed line in FIG. 7). In addition, air accumulates inside the suction pipe 101 not only during operation of the hydraulic pump 103 but also while the hydraulic pump 103 is stopped. If air accumulates inside the suction pipe 101, there is a risk that the accumulated air may flow all at once to the hydraulic pump 103 when the hydraulic pump 103 is restarted. The suction strainer 2A of the present embodiment can prevent air from accumulating inside the suction pipe 101 by discharging the bubbles inside the suction strainer 2A to the tank 100 through the air vent hole 30c before outputting them to the suction pipe 101.

Note that in the present modification, desirably, the air vent hole 30c has a large diameter, and is equal to or greater than half the radius of the hollow part of the filtration part 10, for example.

### Third Embodiment

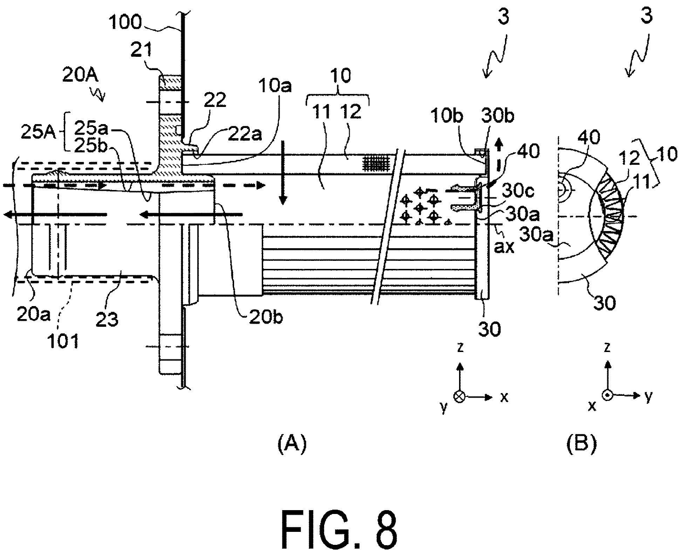

FIG. 8 is a schematic diagram illustrating a suction strainer 3 according to a third embodiment, FIG. 8(A) is a front view, and FIG. 8(B) is a right side view. In FIG. 8(A), the upper half is illustrated in a cross section, and FIG. 8(B) illustrates only the right half. Note that the same parts as those of the first and second embodiments are denoted with the same reference numerals, and the description thereof is omitted.

The suction strainer 3 mainly includes the filtration part 10, the plates 20A and 30, and the float 40.

The plate 20A (corresponding to the first end member of the present invention) mainly includes the attaching portion 21, the attaching portion 22, the mounting pipe 23, the attaching portion 21, and a hole 25A (corresponding to the first hole of the present invention) extending through the attaching portion 22 and the mounting pipe 23.

The hole 25A is provided along the horizontal direction. The hole 25A communicates the hollow part of the filtration part 10 and the outside of the tank 100 (in this case, the suction pipe 101) with each other.

The hole 25A mainly includes a through hole 25a and a recess 25b. The through hole 25a and the recess 25b are integrally provided, and the recess 25b is provided on the upper side of the through hole 25a in the vertical direction. Note that in the present embodiment, the axis of the hole 25A coincides with the central axis ax, but the axis of the hole 25A and the central axis ax may be shifted from each other.

The end (corresponding to the first end of the present invention) of the through hole 25a and the recess 25b on one side (-x side) is open at an end 20a disposed on the outside of the tank 100 of the plate 20E, while the end (corresponding to the second end of the present invention) on the opposite side (+x side) is open at an end 20b on the side on which the filtration part 10 of the plate 20A is provided. The through hole 25a has a tapered shape with an internal diameter that increases toward both ends, but the shape of the through hole 25a is not limited to this.

The recess 25b is substantially parallel to the central axis (in this case, the central axis ax) of the through hole 25a. It should be noted that the recess 25b may not be substantially parallel to the central axis ax. For example, the recess 25b may be tilted with respect to the central axis ax such that the upper end of the recess 25b goes to the +z side as distance to the air vent hole 30c decreases (as it goes toward +x side).

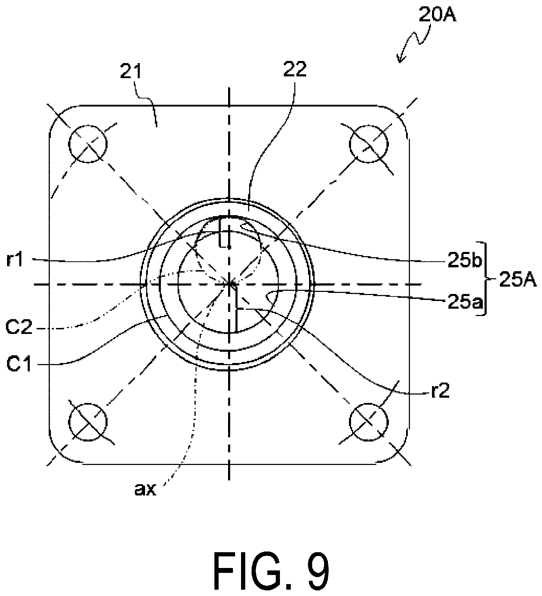

FIG. 9 is a schematic diagram illustrating the plate 20A. In FIG. 9, the plate is viewed from the +y direction. The recess 25b is provided by cutting out a part of the upper peripheral surface of the through hole 25a in the vertical direction, so as to increase the opening area of the hole 25A in the plane orthogonal to the central axis ax.

In the plane orthogonal to the central axis ax, the recess 25b has an arch shape. The recess 25b is curved such that the arch protrudes to the upper side in the vertical direction. The recess 25b may have a rectangular shape or a convex shape protruding to the upper side in the vertical direction, but the recess 25b described in the present embodiment has a shape of a part of a circle. A radius r1 of the arch of the recess 25b is smaller than a radius r2 of the through hole 25a. In addition, a circle C2 including the recess 25b overlaps a circle C1 including the through hole 25a. That is, the through hole 25a and the recess 25b are integrally provided. In this manner, the recess 25b increases the cross sectional area of the hole 25A in the plane orthogonal to the central axis ax.

Note that the through hole 25a has a tapered shape with an internal diameter that increases toward both ends, and although the radius of the circle C1 differs depending on the position, the circle C1 and the circle C2 overlap regardless of the position of the cross section, and the radius of the circle C2 is smaller than the radius of the circle C1.

In FIG. 8, the solid arrow indicates a flow of hydraulic fluid, and the broken arrow indicates a flow of air. The bubbles suctioned into the filtration part 10 together with the hydraulic fluid gather and grow into larger bubbles inside the filtration part 10. The bubbles having grown into larger sizes exert a force in the +x direction on the float 40, which extrudes the float 40 to the +x direction, causing the air vent hole 30c to open. As a result, bubbles are discharged from the air vent hole 30c to the outside of the suction strainer 3.

However, some bubbles having entered the filtration part 10 remain at the hole 25A or the suction pipe 101 without being ejected from the air vent hole 30c. In the following description, the remaining bubbles are referred to as remaining air. Since the recess 25b is provided on the upper side of the through hole 25a in the vertical direction, the remaining air of the hole 25A is accumulated at the recess 25b.

During operation of the work machine or while the work machine is stopped, the float 40 is moved to the -x direction and the air vent hole 30c is closed. However, during refueling (e.g., refueling of hydraulic fluid into new tank 100, replacement of the hydraulic fluid of the tank 100 and the like), the air extrudes the float 40 to the +x direction due to the hydraulic fluid replacing the air inside the suction pipe 101, and as a result, the air vent hole 30c opens.

When the air vent hole 30c opens during refueling, the remaining air accumulated at the recess 25b enters an air vent hole 30cr, and the air is discharged from the air vent hole 30c to the suction strainer 3. In addition, the remaining air accumulated at the suction pipe 101 also enters the recess 25b when the air vent hole 30c opens during refueling, and then the air is discharged to the outside of the suction strainer 3 through the air vent hole 30c.

According to the present embodiment, in the case where the suction strainer 3 is provided along the horizontal direction, bubbles accumulated inside the suction strainer 3 can be discharged from the suction strainer 3 through the air vent hole 30c. In addition, since the recess 25b is provided on the upper side of the through hole 25a in the vertical direction, the remaining air can be effectively discharged to the outside of the suction strainer 3 by collecting the remaining air at the recess 25b.

Note that in the present embodiment, the recess 25b has a circular arch shape protruding to the upper side in the vertical direction in the plane orthogonal to the central axis ax, but the shape and the position of the hole 25A are not limited to this. For example, the recess 25b may have a rectangular shape in the plane orthogonal to the central axis ax. In short, it is only necessary that the through hole 25a and the recess 25b are integrally provided and that the recess 25b is provided on the upper side of the through hole 25a in the vertical direction. It should be noted that when the recess 25b has an arch shape in the plane orthogonal to the central axis ax such that the radius of the arch shape is smaller than the radius of the through hole 25a and the arch shape protrudes to the upper side in the vertical direction, bubbles tend to collect in the vicinity of the upper peripheral surface (the upper end in the vertical direction) of the recess 25b. In addition, with the radius of the arch of the recess 25b smaller than the radius of the through hole 25a, the upper peripheral surface of the recess 25b is reduced, and the bubbles accumulated at the recess 25b are more likely to collectively grow into large bubbles.

In addition, while the recess 25b is added to the suction strainer 1 in the present embodiment, the recess 25b may be added to the suction strainer 2.

The embodiments of the invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. In addition, addition, deletion, replacement or the like of other configurations can be made on the configurations of the embodiments.

Additionally, in the present invention, "substantially" is a concept not only including the case of being strictly the same, but also including an error and deformation to the extent that a loss of identity does not occur. For example, the term "substantially orthogonal" is not limited to the case of being strictly orthogonal, but includes a concept that includes deviations of several degrees, for example. Further, simple expressions such as orthogonal, parallel, and identical are not to be understood as merely being strictly, for example, orthogonal, parallel, and identical, and include being, for example, substantially parallel, substantially orthogonal, and substantially identical.

Additionally, in the present invention, "vicinity" means to include a region in a certain range (the range can be determined arbitrarily) near a reference position. For example, the term "a vicinity of an end" refers to a range of regions in the vicinity of the end, and is a concept indicating that the end may or need not be included.

### Reference Signs List

1, 2, 2A: Suction strainer
10: Filtration part
10a, 10b: End
11: Inner cylinder
12: Pleated filter medium
20, 30, 30A, 30B: Plate
21, 22: Attaching portion
22a: Recess
23: Mounting pipe
25: Hole
30a, 30d: Plate-shaped part
30b, 30e: Recess
30f: Inner peripheral surface
30c: Air vent hole
40: Float
41: Body part
42: Leg part
43: Claw
100: Tank
100a: Bottom surface
100b: Side surface
100c, 100d: Outlet
101: Suction pipe
102: Elastic member
103: Hydraulic pump
110: Hydraulic circuit

## Claims

1. A tank (100) configured to store oil, provided with a suction strainer (1, 2), wherein
the suction strainer is attached along a horizontal direction to the tank, and
the suction strainer comprising:
a filtration part (10) having a cylindrical shape;
a first end member (20) and a second end member (30, 30A) configured to cover respective both ends of the filtration part; and
a float (40) provided at the second end member, wherein
the filtration part is provided along the horizontal direction,
the first end member includes a first attaching portion (21) having a plate shape provided at a side surface of the tank, a second attaching portion (22) provided with the filtration part, and a first hole (25) configured to communicate a hollow part of the filtration part and the outside of the tank,
the second attaching portion, the filtration part, and the second end member are provided inside the tank,
the second end member includes a plate-shaped part (30a, 30d) configured to cover the hollow part of the filtration part,
the plate-shaped part is provided with an air vent hole (30c), and
the float is provided in such a manner that the float is movable in the horizontal direction between a position of closing the air vent hole and a position of opening the air vent hole.

2. The tank according to claim 1, wherein an upper end of the air vent hole is higher than an upper end of the first hole.

3. The tank according to claim 1 or 2, wherein
the filtration part has a circular cylindrical shape, and
a diameter of the air vent hole is equal to or greater than half a radius of the hollow part of the filtration part.

4. The tank according to any one of claims 1 to 3, wherein the plate-shaped part is located on substantially the same plane as an end of the filtration part on the second end member side.

5. The tank according to any one of claims 1 to 4, wherein
the first hole includes a through hole (25a), and a recess (25b) provided integrally with the through hole on an upper side of the through hole in a vertical direction, and
a first end as one end of the through hole and the recess opens at an end of the first attaching portion disposed on the tank side, and a second end of the through hole and the recess on an opposite side of the first end opens at an end of the first attaching portion disposed on the filtration part side.

6. The tank according to claim 5, wherein the recess has an arch shape protruding to an upper side in the vertical direction in a plane orthogonal to a central axis of the through hole.

## Patentansprüche

1. Tank (100), der zum Speichern von Öl konfiguriert ist und mit einem Saugsieb (1, 2) versehen ist, wobei
das Saugsieb entlang einer horizontalen Richtung an dem Tank angebracht ist, und
das Saugsieb umfasst:
einen Filtrationsteil (10) mit einer zylindrischen Form;
ein erstes Endelement (20) und ein zweites Endelement (30, 30A), die konfiguriert sind, jeweils beide Enden des Filtrationsteils abzudecken; und
einen Schwimmer (40), der an dem zweiten Endelement vorgesehen ist, wobei
der Filtrationsteil entlang der horizontalen Richtung vorgesehen ist,
das erste Endelement einen ersten Befestigungsabschnitt (21), der eine Plattenform aufweist und an einer Seitenfläche des Tanks vorgesehen ist, einen zweiten Befestigungsabschnitt (22), der mit dem Filtrationsteil versehen ist, und ein erstes Loch (25) umfasst, das konfiguriert ist, einen Hohlraum des Filtrationsteils und die Außenseite des Tanks zu verbinden,
der zweite Befestigungsabschnitt, der Filtrationsteil und das zweite Endelement innerhalb des Tanks vorgesehen sind,
das zweite Endelement einen plattenförmigen Teil (30a, 30d) umfasst, der konfiguriert ist, den Hohlraum des Filtrationsteils abzudecken,
der plattenförmige Teil mit einem Entlüftungsloch (30c) versehen ist, und
der Schwimmer derart vorgesehen ist, dass der Schwimmer in der horizontalen Richtung zwischen einer Position, in der das Entlüftungsloch geschlossen ist, und einer Position, in der das Entlüftungsloch geöffnet ist, bewegbar ist.

2. Tank nach Anspruch 1, wobei ein oberes Ende des Entlüftungslochs höher ist als ein oberes Ende des ersten Lochs.

3. Tank nach Anspruch 1 oder 2, wobei
der Filtrationsteil eine kreiszylindrische Form aufweist, und
ein Durchmesser des Entlüftungslochs gleich oder größer als die Hälfte eines Radius des Hohlraums des Filtrationsteils ist.

4. Tank nach einem der Ansprüche 1 bis 3, wobei der plattenförmige Teil im Wesentlichen in derselben Ebene wie ein Ende des Filtrationsteils auf der Seite des zweiten Endelements angeordnet ist.

5. Tank nach einem der Ansprüche 1 bis 4, wobei
das erste Loch ein Durchgangsloch (25a) und eine Ausnehmung (25b) umfasst, die integral mit dem Durchgangsloch auf einer Oberseite des Durchgangslochs in einer vertikalen Richtung vorgesehen ist, und
ein erstes Ende als ein Ende des Durchgangslochs und der Ausnehmung an einem Ende des ersten Befestigungsabschnitts mündet, das auf der Tankseite angeordnet ist, und ein zweites Ende des Durchgangslochs und der Ausnehmung auf einer dem ersten Ende entgegengesetzten Seite an einem Ende des ersten Befestigungsabschnitts mündet, das auf der Seite des Filtrationsteils angeordnet ist.

6. Tank nach Anspruch 5, wobei die Ausnehmung eine Bogenform aufweist, die in einer Ebene orthogonal zu einer Mittelachse des Durchgangslochs zu einer Oberseite in der vertikalen Richtung vorsteht.

## Revendications

1. Réservoir (100) configuré pour stocker de l'huile, pourvu d'une crépine d'aspiration (1, 2), dans lequel
la crépine d'aspiration est fixée au réservoir le long d'une direction horizontale, et
la crépine d'aspiration comprend :
une partie de filtration (10) ayant une forme cylindrique ;
un premier élément d'extrémité (20) et un second élément d'extrémité (30, 30A) configurés pour recouvrir respectivement les deux extrémités de la partie de filtration ; et
un flotteur (40) prévu au niveau du second élément d'extrémité, dans lequel
la partie de filtration est prévue le long de la direction horizontale,
le premier élément d'extrémité comprend une première partie de fixation (21) ayant une forme de plaque prévue au niveau d'une surface latérale du réservoir, une seconde partie de fixation (22) pourvue de la partie de filtration, et un premier trou (25) configuré pour faire communiquer une partie creuse de la partie de filtration et l'extérieur du réservoir,
la seconde partie de fixation, la partie de filtration et le second élément d'extrémité sont prévus à l'intérieur du réservoir,
le second élément d'extrémité comprend une partie en forme de plaque (30a, 30d) configurée pour recouvrir la partie creuse de la partie de filtration,
la partie en forme de plaque est pourvue d'un trou d'évent (30c), et
le flotteur est prévu de telle manière que le flotteur est mobile dans la direction horizontale entre une position de fermeture du trou d'évent et une position d'ouverture du trou d'évent.

2. Réservoir selon la revendication 1, dans lequel une extrémité supérieure du trou d'évent est plus haute qu'une extrémité supérieure du premier trou.

3. Réservoir selon la revendication 1 ou 2, dans lequel
la partie de filtration a une forme cylindrique circulaire, et
un diamètre du trou d'évent est égal ou supérieur à la moitié d'un rayon de la partie creuse de la partie de filtration.

4. Réservoir selon l'une quelconque des revendications 1 à 3, dans lequel la partie en forme de plaque est située sensiblement dans le même plan qu'une extrémité de la partie de filtration du côté du second élément d'extrémité.

5. Réservoir selon l'une quelconque des revendications 1 à 4, dans lequel
le premier trou comprend un trou traversant (25a) et un évidement (25b) prévu d'un seul tenant avec le trou traversant sur un côté supérieur du trou traversant dans une direction verticale, et
une première extrémité, en tant qu'une extrémité du trou traversant et de l'évidement, s'ouvre au niveau d'une extrémité de la première partie de fixation disposée du côté du réservoir, et une seconde extrémité du trou traversant et de l'évidement, sur un côté opposé à la première extrémité, s'ouvre au niveau d'une extrémité de la première partie de fixation disposée du côté de la partie de filtration.

6. Réservoir selon la revendication 5, dans lequel l'évidement a une forme d'arche faisant saillie vers un côté supérieur dans la direction verticale dans un plan orthogonal à un axe central du trou traversant.
